# EUROPEAN PATENT APPLICATION

(11) **EP 1 870 805 A1**
(43) Date of publication of application: **26.12.2007**
(21) Application number: 06447084.2
(22) Date of filing: 22.06.2006
(51) Int. Cl.: G06F 9/44

(54) **Method and device for updating a language in a user interface**

(71) Applicant: Thomson Telecom Belgium, 2650 Edegem (BE)
(72) Inventor: Peckelbeen, Sascha, 8300 Knokke-Heist (BE)
(74) Representative: Berthier, Karine

(57) **Abstract**

The present invention concerns a first device (1) comprising an interface (8) for connection to a network (2) comprising a second device (3), and comprising a user interfacing means (41) for providing content to a user interface (20), the user interfacing means comprising at least one element (21) in a given language and a list of languages (22) available for the at least one element, the given language being stored in a memory (4). The first device comprises means for retrieving information about available languages for said element (21) from said second device (3), and means for updating the list of languages (22) available.

## Description

The present invention relates to a method and a device for updating a language in a user interface.

A gateway device comprises among others web interfaces and firmware embedded help menus. Nowadays, language packs that contain the localizations of some digital subscriber line gateway web interface and its firmware embedded help are made available on a compact disk read only memory that is delivered with the gateway device. Iterations of these language packs that are due to updates, corrections or software variants cannot reach the customer, unless a new iteration of the compact disk becomes available. The language packs are usually only available on the compact disk, nowhere else, and short-term updates of language packs are not available to the customer. New language packs for an additional language can never be offered to the customer without notification. If no compact disk is delivered with the product, only language packs that are embedded in the software build can be offered to the customer.

To this end, the invention relates to a first device comprising an interface for connection to a network comprising a second device, and comprising a user interfacing means for providing content to a user interface, the user interfacing means comprising at least one element in a given language and a list of languages available for the at least one element, the given language being stored in a memory.

According to the invention, the first device comprises means for retrieving information about available languages for said element from said second device, and means for updating the list of languages available.

Thus the list of language available for the user interface is always up to date. A language that is not yet available or no longer available is not indicated in the list.

According to an embodiment of the invention, the device comprises means for downloading a new version of the given language from the second device.

The language shown on the user interface is always the last version available.

According to an embodiment of the invention, the device comprises means for being indicated a selected language among the list of languages available, and means for downloading the selected language from the second device.

According to an embodiment of the invention, the device comprises means for setting the language of the element into the new version or into the selected language without rebooting the device.

The device is not interrupted for updating the language. And the service offered by the device is also not broken.

According to an embodiment of the invention, the list of languages comprises a maximum number of entries that is configurable.

It is not necessary to propose all the possible languages in the list. The subset of languages available may correspond to the area where the device is to be used.

According to an embodiment of the invention, the user interfacing means are adapted to manage an application running on the device.

Another object of the invention is a method for updating a language of an element in a user interface of a first device connected to a second device.

According to the invention, the method comprises the steps of checking languages available for the element on the second device by the first device, and displaying a list of languages available on the user interface by the first device.

According to an embodiment of the invention, the method comprises the steps of selecting a language from the list by a user, downloading the selected language by the first device from the second device, and displaying the content in the new language on the user interface.

According to an embodiment of the invention, the method comprises the steps of checking by the first device the availability of a new version of the language on the second device, downloading the new version of the language by the first device from the second device, and displaying the content in the new version of the language.

Another object of the invention is a computer program product comprising program code instructions for executing the steps of the process according to the invention, when that program is executed on a computer. By "computer program product", it is meant a computer program support, which may consist not only in a storing space containing the program, such as a diskette or a cassette, but also in a signal, such as an electrical or optical signal.

The invention will be better understood and illustrated by means of the following embodiment and execution examples, in no way restrictive, with reference to the appended figures among which:
- Figure 1 is a user interface according to the embodiment.
- Figure 2 is a block diagram of an object compliant with the embodiment; and
- Figure 3 is a flow chart representing the update of the language pack.

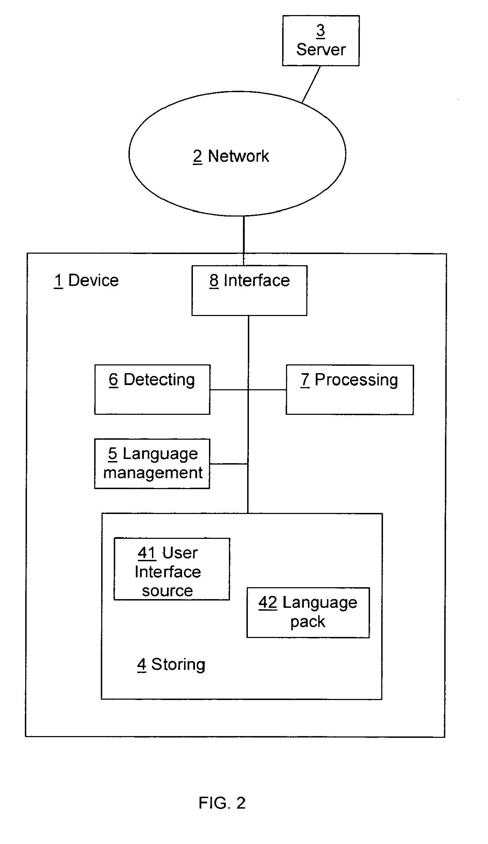

In Figure 2, the represented blocks are purely functional entities, which do not necessarily correspond to physical separated entities. Namely, they could be developed in the form of software, or be implemented in one or several integrated circuits.

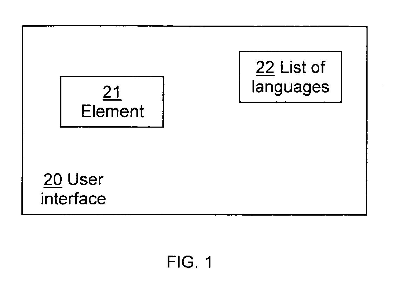

The figure 1 represents the user interface 20 according to the embodiment. It comprises an element 21 that appears in a language form. According to the embodiment, the language is a written language such as French or English. In another embodiment, the language might be a system of signs or symbols different from a vocabulary.

The user interface 20 also comprises a list of languages 22 under which the element may appear. According to the embodiment the element may appear in French, and the list of languages may comprise English, German and Belgian. In another embodiment, where the language is a system of signs or symbols, the element might appear in a vocabulary of symbol, and the list comprises other vocabularies of symbols available for the element.

The figure 2 represents the device of the embodiment. The device 1 comprises an interface 8 to connect to a network 2. It permits the device 1 to have access to the network. The device might not have direct access to the network, but being connected to another device that offers the access to the network. A server 3 is connected to the network 2. The device may detect that the server is connected to the network and may access the server through the network. According to the embodiment, the network is the Internet. It could be another type of network, such as a local area network that comprises a server.

According to the embodiment, the server 3 comprises all the updated versions of the language pack files. The server is accessible at a known address, such as the www.speedtouch.com uniform resource locator, noted URL. The server is reachable by all the devices that implement the user interface of the embodiment. The devices may then download the selected language. In case the URL of the "language pack server" is configurable (for example for the purpose of product customizations), accessibility of this server does not necessarily mean Internet connectivity; it could also be located in the local area network of the device.

The device 1 comprises an interface 8 to connect the device to a network. According to the embodiment, the interfacing means is an Ethernet interface and the network is the Internet. It might be any type of interface that provides access to a network. According to the embodiment, the device is a Digital Subscriber Line gateway. It could be any device that comprises a user interface and can connect to a server.

The device comprises a memory 4, a processor 7, a user interface source 41, a language management module 5 and a language pack 42. According to the embodiment, the user interface source is comprised in the firmware of the device.

The user interface source 41 refers to the graphical, textual and auditory information the device presents to a user, and permits the user to manage the device. It comprises web pages that are shown on a user interface, which is a screen linked to the device. The web pages comprise the device management pages and the firmware embedded help. In another embodiment, the user interface permits to manage any application running on the device.

The memory is a non-volatile memory such as a random access memory. The language pack is a folder in the file system of the device, located in the memory. The language pack is "read" by the device each time a device Web page is loaded on the user interface. According to the embodiment, the user interface source is represented as an HTML code with strings that have been marked as "to-be-translated". When a page is triggered by a user of the user interface with an HTTP request and the page is loaded, each strings encountered that should be translated is looked up in the language pack file, and is shown up as the found matching translation. The language pack comprises the vocabulary that is showed in the user interface in a selected language. In another embodiment the language could be in the form of a sound, a colour, or a set of figures.

The device comprises detecting module 6 for detecting the presence of a server on the network. According to the embodiment, the device has a routine to check for Internet connectivity; then the further step is to check for server accessibility at the known URL. In another embodiment the device periodically sends requests to the server at the known URL, without initial verification of the Internet connectivity.

The device comprises a language management module 5 to perform the management of the language packs 42. It checks the server for the language packs updates, it updates the language bar in the user interface, and it downloads the language pack selected by the user.

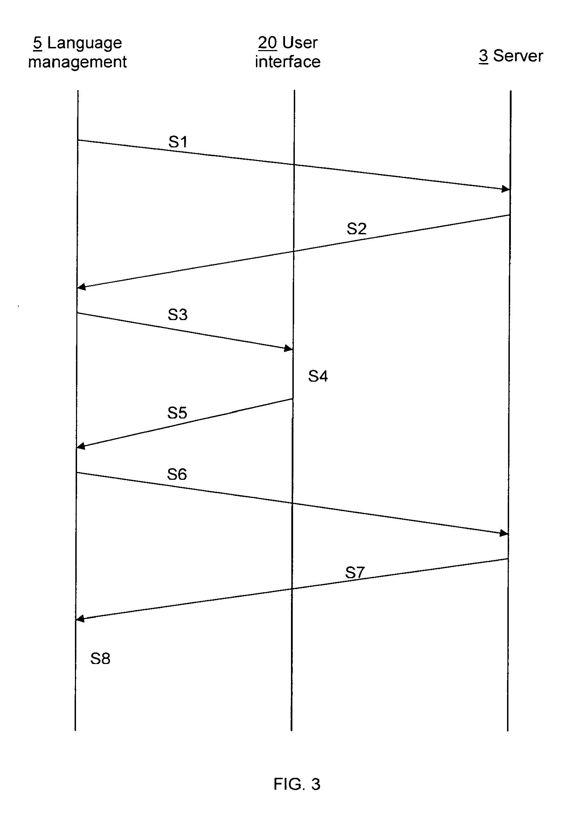

The figure 3 is a flow chart diagram that indicates the interactions between the device and the server.
Step S1: the language management module has been informed that a server has been detected on the network. It checks the list of languages available for the version number of the build iteration of the device.
Step S2: the language management module receives the list of languages available.
Step S3: the language management module indicates the list to the user interface.
Step S4: a user selects a language in the list on the user interface.
Step S5: the language management module is informed on the selection of the new language.
Step S6: the language management module sends a request to the server to download the selected language pack.
Step S7: the language management module receives the selected language pack from the server.
Step S8: the language management module updates the language pack with the new language pack that has been completely downloaded. The user interface is also updated with the new language. It is not necessary to reboot the device to take into account the new language.

At the steps S6 if the connection to the server is down, the device may sends a pop-up window on the user interface to indicate that the connection is down. In another embodiment, it may automatically update the list of languages, and indicate only the languages that correspond to the language packs stores locally in the device.

Per default at power-up, the device offers its Web interface in English language only to a user. Of course the language might be another language; or the device might also not comprise any language at power up.

The device is able to automatically check on a server, at the www.speedtouch.com address, whether most recent language packs exist. The URL is customizable, and might be a URL corresponding for example to an internet service provider's Central Office network.

The device checks which local languages are available to the user for a given software build of the Web interface. The Language packs have a version number that is locked with the build iteration. The languages that are available for this specific device, and the specific software build, are dynamically displayed on the device web interface in a language bar. The device does not « know » that a language pack is available and it doesn't have to know it even. The query to the server is meant to trigger the device to blindly show the language bar with available localized language packs. The actual management of available localized language packs is done at server-level (online query server).

The language bar is for example a scroll bar. If the device is not online, only the current language stored in the file system of the device is available and indicated in the scroll bar. The language bar comprises the list of languages available for the software build of the Web interface of the device. According to the embodiment it comprises all the language available on the server.

In another embodiment, the device might comprise a subset of all the languages available. For example, the device might be a DSL modem to be sold in Belgium. The list of languages might be the languages used in the area around Belgium, such as French, German, Dutch, and English.

According to the embodiment, the device stores only one language in the file system. In another embodiment, the device might be able to store more than one language; and the languages are available to the user when the device is offline. The number of languages that can be stored is configurable by a user.

When the user selects a certain language from the list of available languages presented in the language bar, the appropriate language pack is downloaded and enabled. This is the latest version available. The web interface is shown in the selected language. If another language pack is present in the memory, this language pack is removed, thus preserving space on the file system. In a variant embodiment, the device comprises a volatile memory where the new version of the language pack is first stored. The language then is stored in the non-volatile memory upon an approval from the end user.

The device checks the server at power-up and during regular service. After power-up, as soon as the operational software is initialized, the device checks for Internet connectivity. If Internet connectivity exists, the query for the listing available or updated localized language packs is done a first time. Some examples of power-up are: cold-(re)start, warm-restart, reset-to-defaults, software updates, Software Module activations.

In case of session connectivity, according to point-to-point protocol, the Internet Service Providers usually let the session drop after a period of time, after which the device can attempt to reconnect the session. After this occasion the device should again query for a listing of localized or updated language packs as soon as session is up and Internet connectivity exists. It acts in a way similar to a Dynamic DNS feature.

When the system is up and running, during regular service, it performs a periodic (re-)query for an updates listing. This may for example be done every twenty four hours, and it is customizable.

The device checks for new languages each time the connectivity to the server has been detected, and periodically during regular service.

When a new version of the selected language is available on the server, the device automatically downloads the new version.

In another embodiment, the availability of a new language is notified to the user. It uses a system message on the web interface, which indicates the new language available. The new language may also be highlighted in the scroll bar. In another embodiment, the new language could be indicated with an email notification system.

## Claims

1. First device (1) comprising an interface (8) for connection to a network (2) comprising a second device (3), and comprising a user interfacing means (41) for providing content to a user interface (20), said user interfacing means comprising at least one element (21) in a given language and a list of languages (22) available for said at least one element, said given language being stored in a memory (4),
**characterized in that** it comprises:
- means for retrieving information about available languages for said element (21) from said second device (3), and
- means for updating the list of languages (22) available.

2. Device according to claim 1, **characterized in that** it comprises means for downloading a new version of the given language from the second device.

3. Device according to claim 1, **characterized in that** it comprises means for being indicated a selected language among the list of languages available, and means for downloading said selected language from the second device.

4. Device according to the claim 2 or 3, **characterized in that** it comprises means for setting the language of the element into the new version or into the selected language without rebooting the device.

5. Device according to any of the preceding claims, **characterized in that** said list of languages comprises a maximum number of entries.

6. Device according to claim 5, **characterized in that** said maximum number of entries is configurable.

7. Device according to any of the preceding claims, **characterized in that** said user interfacing means are adapted to manage an application running on said device.

8. Method for updating a language of an element (21) in a user interface (20) of a first device (1) connected to a second device (3),
**characterized in that** it comprises the steps of:
- checking languages available for said element (21) on said second device (3) by said first device (1), and
- displaying a list of languages (22) available on the user interface (20) by said first device.

9. Method according to the preceding claim **characterized in that** it comprises the steps of:
- selecting a language from the list by a user,
- downloading the selected language by the first device from the second device, and
- displaying said content in the new language on said user interface.

10. Method according to claim 9, **characterized in that** it comprises the steps of,
- checking by said first device the availability of a new version of said language on said second device,
- downloading said new version of said language by the first device from the second device, and
- displaying said content in the new version of said language.
